Europäisches Patentamt

European Patent Office

Office européen des brevets

(11) Publication number: **0 248 578 B1**

# EUROPEAN PATENT SPECIFICATION

(45) Date of publication of patent specification: 02.05.91

(51) Int. Cl.5: **F25B 11/00**, F25B 9/00, //B64D13/06

(21) Application number: 87304613.0

(22) Date of filing: 22.05.87

(54) Air cycle cooling systems.

(30) Priority: 02.06.86 GB 8613306

(43) Date of publication of application:
09.12.87 Bulletin 87/50

(45) Publication of the grant of the patent:
02.05.91 Bulletin 91/18

(84) Designated Contracting States:
DE ES FR GB IT

(56) References cited:
GB-A- 2 087 540
US-A- 3 657 898
US-A- 3 877 246

(73) Proprietor: NORMALAIR-GARRETT
(HOLDINGS) LIMITED
Group Patents Dept. Westland Works Box 82
Yeovil Somerset, BA20 YB(GB)

(72) Inventor: Richards, Donald James
16 Tarrett Road
Yeovil Somerset(GB)
Inventor: Roots, Christopher Francis
Bridge Cottage Lufton
Yeovil Somerset(GB)

(74) Representative: Jack, Bruce James et al
FORRESTER & BOEHMERT Widenmayer-
strasse 4/I
W-8000 Munchen 22(DE)

**Description**

Air Cycle Cooling Systems

This invention relates to air cycle cooling systems and is more particularly concerned with such systems which are of so-called "bootstrap" type.

An air cycle cooling system generally comprises a fluidly interconnected air expansion turbine, air compressor and at least one heat exchanger. In operation of the system a turbine wheel drives a compressor wheel mounted on a common shaft so that working air, in passing through the system, loses heat in expanding across the turbine wheel which is rotated thereby and caused to drive the compressor wheel which increases the density of the working air before its entry to the turbine. Coolant heat exchangers and/or load heat exchangers are situated in a system according to the duty required thereof. The term 'air cycle cooling system' will be abbreviated hereinafter to ACCS.

A "bootstrap" ACCS is one in which working air is fed for expansion across a turbine wheel by way of a compressor wheel and an interposed coolant heat exchanger. The working air is first increased in density by compression during which process the temperature of the air is raised whereafter heat is removed from the air during passage through the heat exchanger before the air enters the turbine for expansion and a resultant further reduction in temperature. The cooled or chilled working air delivered from the turbine is thereafter usually utilised for cooling by way of a load heat exchanger and/or by selective mixing with warmer air to obtain conditioned air at a desired temperature for supply to a cabin or compartment. The working air is usually obtained from an engine compressor stage and is fed into the system by way of a pre-cooler, i.e. pre-positioned heat exchanger, in order to reduce the high initial temperature of the air.

On some occasions it is expedient in designing an ACCS of bootstrap type to arrange for the working air to flow in reverse direction relative to that in a true bootstrap arrangement as hereinbefore described, i.e. the working air is fed to a compressor wheel by way of an expansion turbine wheel and an interposed load heat exchanger, whereby the cooled or chilled air from the turbine wheel in being effective in cooling the load, gains heat therefrom before entering the compressor. Such a bootstrap arrangement is generally known by the term "reverse bootstrap".

A bootstrap ACCS may be of simple form in which the working air alone drives a rotatable assembly comprising a common mounted turbine wheel and compressor wheel, or it may be of a less simple form, known as a powered bootstrap ACCS in which the rotatable assembly is driven by means other than primary working air. The drive for this latter form of ACCS may be by means of a second turbine wheel mounted on the shaft of the rotatable assembly and powered by secondary working air that expands across the second turbine wheel and results in a useful flow of cooled air. Alternatively, a powered bootstrap ACCS may be powered by non-fluid means such as an electric motor mechanically coupled to the shaft of the rotatable assembly, however, such alternative is of no concern herein.

In comparing the performance of a simple bootstrap ACCS, and a turbine powered bootstrap ACCS we have found that for similar operating values within the two systems a simple bootstrap system obtains better performance when the turbine inlet temperature is high compared with the load-off temperature. On the other hand, when the turbine inlet temperature is low compared with the load-off temperature, we have found that better performance is obtained by a turbine powered bootstrap system. The term "load-off temperature" means the temperature of the working air at the outlet of a load heat exchanger.

The closest prior art disclosures of which we are aware are found in GB-A-976564 and US-A-3877246.

GB-A-976564 discloses an aircraft ACCS in which engine compressor air is expanded by a first turbine wheel and fed as conditioning air to a cabin. This first turbine wheel drives a compressor wheel which draws recirculation air from the cabin and after a first stage compression the recirculation air is passed to a simple bootstrap compressor wheel and turbine wheel arrangement where it undergoes a second stage compression before being expanded. This expanded recirculation air is then mixed with expanded air from the first turbine and fed as conditioning air to the cabin.

US-A-3877246 discloses an aircraft ACCS in which engine compressor air is supplied by way of a pre-cooler heat exchanger to first and second turbine wheels arranged in series so that the air undergoes two expansion stages before being supplied as conditioning air to an aircraft cabin. A compressor wheel driven by the second turbine wheel draws recirculation air from the cabin and after compression this air is passed through a heat exchanger before being added to expanded air flowing from the first turbine wheel to the second turbine wheel.

It is an object of the present invention to provide an ACCS of bootstrap type having a performance which combines substantially the best performance aspects of a prior art simple bootstrap ACCS and a prior art turbine powered ACCS.

It is a further object of the present invention to provide an ACCS of bootstrap type which enables extraction of more heat from the working air thereof than prior art systems and which allows the use of high overall pressure ratios without substantially sub-zero turbine outlet temperatures obtaining.

According to the present invention an air cycle cooling system of bootstrap type comprising a rotatable assembly having an air compressor wheel, a first air expansion turbine wheel and a second air expansion turbine wheel, a first conduit providing fluid connection between the compressor wheel and the first turbine wheel, and a second conduit providing fluid connection between the first turbine wheel and a heat load, is characterised by a third conduit providing fluid connection between the heat load and an inlet to the second turbine wheel and a fourth conduit providing fluid connection between an outlet from the second turbine wheel and a heat load.

In an air cycle cooling system in accordance with the present invention compressed working air from the compressor wheel is expanded across the first turbine wheel so that its temperature is reduced to provide a flow of coolant working air which is used to extract heat from a heat load. Having extracted heat from the heat load the warmed working air is passed to a second air expansion turbine wheel by which it is further expanded so that its temperature is lowered and it has additional capacity as coolant working air for use in extracting heat from the same or another heat load.

Coolant working air flowing from the first and second air expansion turbines may be placed in heat exchange relationship with a heat load by way of heat exchangers or, alternatively, it may be supplied as conditioned air at a desired temperature to an enclosure such as an aircraft cabin.

In a preferred embodiment of the invention working air flows from a source of pressurised air to the compressor wheel by way of a pre-cooler heat exchanger.

For ease of identification of an ACCS according to the present invention it will be referred to hereinafter as a 'dual turbine bootstrap' ACCS.

The invention will now be further described by way of example and with reference to the accompanying drawings in which:-

Figure 1 schematically illustrates a prior art simple bootstrap ACCS;

Figure 2 schematically illustrates a prior art turbine powered bootstrap ACCS;

Figure 3 schematically illustrates a dual turbine bootstrap ACCS according to one embodiment of the present invention; and

Figure 4 graphically illustrates performance characteristics of comparable ACCS as illustrated in Figures 1, 2 and 3.

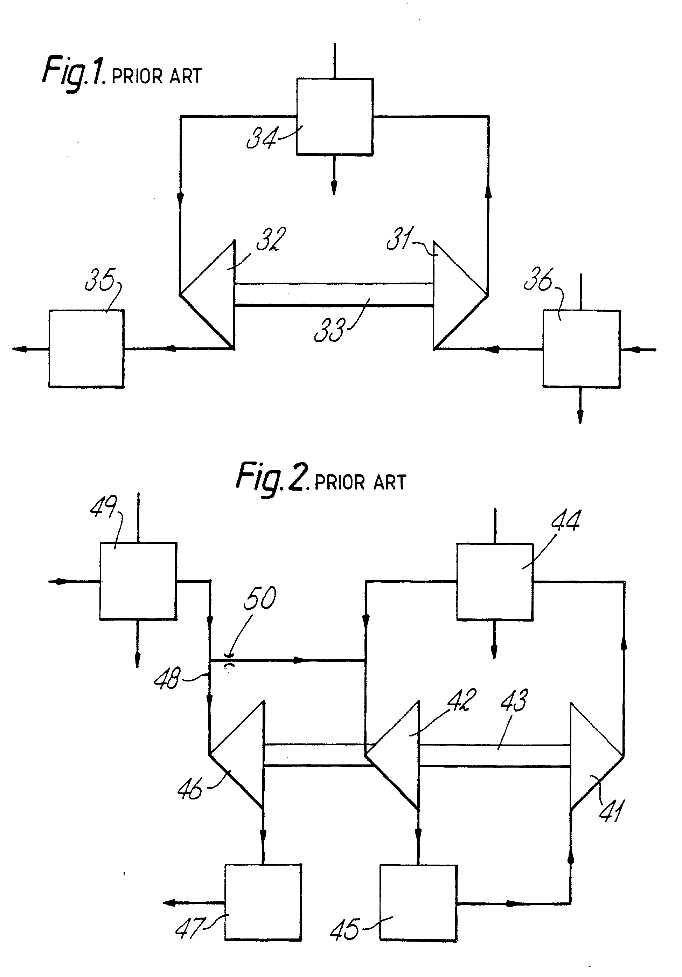

Referring first to Figure 1 of the accompanying drawings a prior art simple bootstrap ACCS comprises a compressor 31 and an air expansion turbine 32, of which the respective wheels are mounted on a common shaft 33. The compressor 31 is conduitly connected to the turbine 32 by way of a coolant heat exchanger 34 and the turbine outlet is similarly connected to a load heat exchanger 35. An optional pre-cooler heat exchanger 36 may be included in the working air supply line to the compressor.

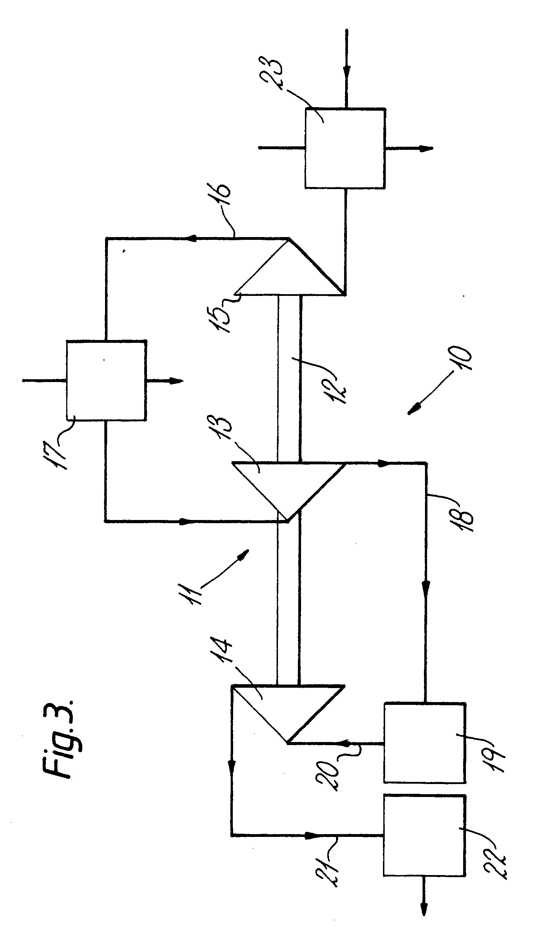

Referring next to Figure 2 of the accompanying drawings, a prior art turbine powered bootstrap ACCS comprises a compressor 41 and a first air expansion turbine 42 of which the respective wheels are mounted on a common shaft 43. The compressor 41 is conduitly connected to the turbine 42 by way of a coolant heat exchanger 44 and the turbine outlet is conduitly connected to the inlet of the compressor 41 by way of a load heat exchanger 45. One end of the shaft 43 carries a second, or drive, air expansion turbine 46, the outlet of which is conduitly connected to another load heat exchanger 47. The inlet of the second turbine 46 is conduitly connected by a supply line 48 to receive working air by way of an optional precooler heat exchanger 49. A restricted conduit 50 connects the supply line 48 into the conduit connecting the coolant heat exchanger 44 and the first turbine 42 for maintenance of a substantially closed circuit containing the primary working air.

A dual turbine bootstrap ACCS 10 in accordance with one embodiment of the invention, and shown in Figure 3 of the accompanying drawings, comprises a three wheel rotating assembly 11 formed by a shaft 12 carrying, integral therewith, a first turbine wheel 13 interposed between a second turbine wheel 14 and a compressor wheel 15. A first conduit 16 provides fluid connection between the compressor wheel 15 and the first turbine wheel 13. Interposed in the first conduit 16 between the compressor wheel 15 and the first turbine wheel 13 is a coolant heat exchanger 17.

A second conduit 18 provides fluid connection between the first turbine wheel 13 and a heat load which in this embodiment comprises a load heat exchanger 19.

A third conduit 20 provides fluid connection between an outlet from the load heat exchanger 19 and the inlet to the second turbine wheel 14.

A fourth conduit 21 provides fluid connection between an outlet from the second turbine wheel 14 and another heat load which in this embodiment comprises a load heat exchanger 22.

An optional pre-cooler heat exchanger 23 is provided at the inlet to the compressor wheel 15.

The load heat exchangers 19, 22 may comprise any convenient arrangement for the transfer of heat from a subject to the working air, such as a heat exchanger, a compartment containing electronic equipment or a cabin.

In operation of the ACCS 10 working air is obtained from a suitable source at appropriate conditions of flow, such as may be provided by air tapped from a compressor stage of a gas turbine engine in an aircraft application and supplied by way of appropriate pressure reducing and flow control valves (none being shown) before entering the system 10 by way of the pre-cooler heat exchanger 23. The pre-cooler heat exchanger 23 reduces the temperature of the working air to a value compatible with the system design criteria by heat exchange relationship with a suitable coolant flow such as ram air.

The working air then enters a compressor and is compressed by the compressor wheel 15, gaining an increase in temperature in the process, after which heat is removed as the working air passes through the coolant heat exchanger 17 in the first conduit 16 on its way to a turbine in which it expands across the first turbine wheel 13 and is considerably cooled in so doing. From this turbine the cooled working air is passed by way of the second conduit 18 to load heat exchanger 19 for heat exchange with a heat load. The working air having gained heat from the heat load passes from the heat exchanger 19 to another turbine in which the working air flows across the second turbine wheel 14 where it is further expanded and cooled. This air is then passed by way of the fourth conduit 21 to the load heat exchanger 22 for heat exchange with a heat load and is thereafter discharged to further duty or vented.

The two load heat exchangers 19, 22 may derive their respective heat loads from a common or separate heat source(s) and obtain their coolant flow from a recirculating air supply or other convenient medium.

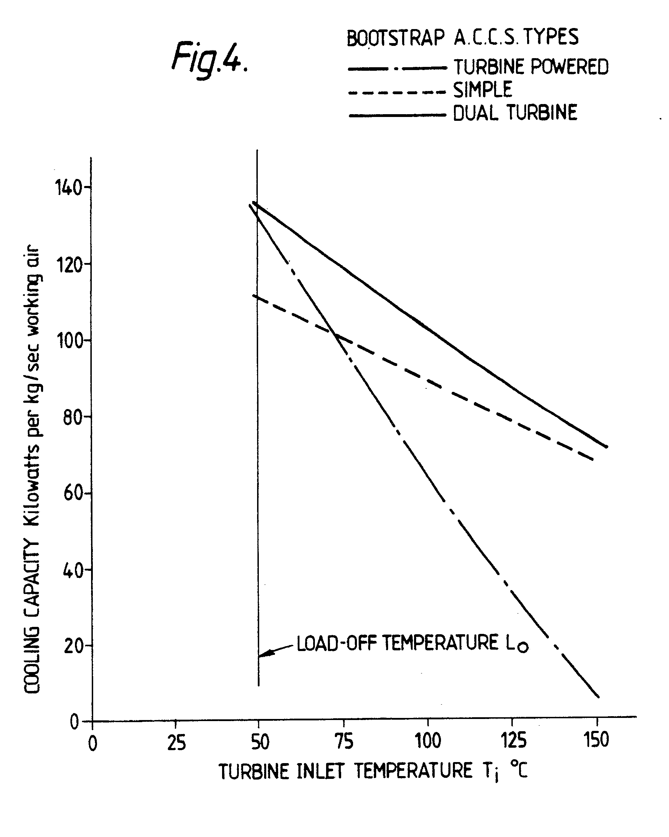

Comparison of the performance of a dual turbine bootstrap ACCS, according to present invention, with a prior art simple bootstrap ACCS and a prior art powered bootstrap ACCS is shown in Figure 4 which plots the cooling capacity of the systems in kilowatts per kilogram/second flow of working air against turbine inlet temperature $T_i$ for constant load-off temperature values $L_o$ with a compressor inlet temperature of 50°C. In each of the systems the turbine inlet temperature $T_i$ is measured at the turbine located immediately downstream of the respective coolant heat exchanger, so that in the systems illustrated in Figures 1, 2 and 3 the temperature $T_i$ is measured, respectively, at the inlet to the turbine 32; at the inlet to the turbines 42 and 46; and at the inlets to the turbines 13 and 14; whilst the compressor inlet temperature $C_i$ is measured, respectively, at the inlet to compressors 31, 41 and 15.

The operating values shown in Figure 4 clearly show that a dual turbine bootstrap ACCS according to the present invention provides performance advantage over the prior art simple bootstrap and turbine powered bootstrap ACCS, this being brought about by the use of a dual expansion process which extracts more heat from the working air and also allows the use of high overall pressure ratios without substantially sub-zero turbine outlet temperatures obtaining.

## Claims

1. An air cycle cooling system of bootstrap type comprising a rotatable assembly having an air compressor wheel, a first air expansion turbine wheel and a second air expansion turbine wheel, a first conduit providing fluid connection between the compressor wheel and the first turbine wheel, and a second conduit providing fluid connection between the first turbine wheel and a heat load, characterised by a third conduit providing fluid connection between the heat load and an inlet to the second turbine wheel and a fourth conduit providing fluid connection between an outlet from the second turbine wheel and a heat load.

2. An air cycle cooling system as claimed in Claim 1, further characterised in that air expanded by the second turbine wheel extracts heat from the heat load by way of a heat exchanger.

3. An air cycle cooling system as claimed in Claim 1 or Claim 2, characterised in that the heat load from which air expanded by the second turbine wheel extracts heat comprises the same heat load from which air expanded by the first turbine wheel extracts heat.

## Revendications

1. Système frigorifique à cycle d'air du type à amorçage comprenant un ensemble tournant composé d'une roue de compresseur d'air, d'une première roue de turbine à détente d'air et d'une deuxième roue de turbine à détente d'air, un premier conduit assurant la communication de fluide entre la roue de compresseur et la première roue de turbine, et un deuxième conduit assurant la communication de fluide entre la première roue de turbine et une charge thermique, caractérisé par un troisième conduit assurant la communication de fluide entre la charge thermique et une entrée à la deuxième roue de turbine, et un quatrième conduit assurant la communication de fluide entre une sortie de la deuxième roue de turbine et une charge thermique.

2. Système frigorifique à cycle d'air suivant la revendication 1, caractérisé en outre en ce que l'air détendu par la deuxième roue de turbine extrait de la chaleur de la charge thermique au moyen d'un échangeur de chaleur.

3. Système frigorifique à cycle d'air suivant la revendication 1 ou la revendication 2, caractérisé en ce que la charge thermique,dont l'air détendu par la deuxième roue de turbine extrait de la chaleur, comprend la même charge thermique dont l'air détendu par la première roue de turbine extrait de la chaleur.


**Ansprüche**

1. Luftkühlungssystem der "Bootstrap-Bauform", mit einer drehbaren Einheit mit einem Luftkompressorrad, einem ersten Turbinenrad und einem zweiten Turbinenrad, einer ersten Leitung, die das Kompressorrad und das erste Turbinenrad miteinander verbindet und einer zweiten Leitung, die das erste Turbinenrad und einen eine Wärmelast bereitstellenden Wärmetauscher verbindet, dadurch gekennzeichnet, daß eine dritte Leitung den Wärmetauscher und einen Einlaß des zweiten Turbinenrads verbindet und eine vierte Leitung einen Ausgang des zweiten Turbinenrads mit einem Wärmetauscher mit wärmebelastung verbindet.

2. Luftkühlungssystem nach Anspruch 1, dadurch gekennzeichnet, daß die in dem zweiten Turbinenrad expandierte Luft Wärme aus der Wärmebelastung mittels eines Wärmetauschers aufnimmt.

3. Luftkühlungssystem nach Anspruch 1 oder 2, dadurch gekennzeichnet, daß die Wärmebelastungsquelle, aus der die Luft, die in dem zweiten Turbinenrad expandiert worden ist, Wärme aufnimmt, die Wärmebelastungsquelle umfaßt, aus der die Luft, die in dem ersten Turbinenrad expandiert worden ist, Wärme aufnimmt.

*Fig.1.* PRIOR ART

*Fig.2.* PRIOR ART

Fig.3.

Fig.4.

BOOTSTRAP A.C.C.S. TYPES
— · — TURBINE POWERED
— — — SIMPLE
——— DUAL TURBINE

LOAD-OFF TEMPERATURE $L_O$

COOLING CAPACITY Kilowatts per kg/sec working air

TURBINE INLET TEMPERATURE $T_i$ °C